# EUROPÄISCHE PATENTSCHRIFT

(11) **EP 3 501 261 B1**
(45) Veröffentlichungstag und Bekanntmachung des Hinweises auf die Patenterteilung: **24.04.2024**
(21) Anmeldenummer: 18212907.2
(22) Anmeldetag: 17.12.2018
(51) Int. Cl.: A01F 15/07, B65B 11/00

(54) **LEITMITTEL, BALLENPRESSE UND VERFAHREN**
GUIDANCE MEANS, BALER AND METHOD
MOYEN DE GUIDAGE, PRESSE À BALLES ET PROCÉDÉ

(30) Priorität: 19.12.2017 DE 102017223285
(43) Veröffentlichungstag der Anmeldung: 26.06.2019
(73) Patentinhaber: Deere & Company, Moline, IL 61265 (US)
(72) Erfinder: Dutertre, Mathieu, 68163 Mannheim (DE); Gresset, Pascal, 68163 Mannheim (DE); Repecaud, Romain, 68163 Mannheim (DE); Marchiset, Stephane, 68163 Mannheim (DE)
(74) Vertreter: Stein, Stefan

(56) Entgegenhaltungen:
- EP-A1- 1 454 521
- EP-A1- 3 216 341
- US-A- 5 557 906

## Beschreibung

Die vorliegende Erfindung betrifft ein Leitmittel, für eine Ballenpresse zur Bildung rundzylindrischer Pressballen mit einer Umhüllungsvorrichtung zur Umhüllung eines Pressballens mit einem Hüllmaterial und einer Leiteinrichtung zur Heranführung von Hüllmaterial an einen Pressraum der Ballenpresse, ausgebildet, um das Hüllmaterial von der Umhüllungsvorrichtung zu der Leiteinrichtung zu leiten, Die vorliegende Erfindung betrifft ferner eine Ballenpresse und ein Verfahren zum Betrieb einer Ballenpresse.

Bekannte Leitmittel werden an Ballenpressen eingesetzt, um ein Hüllmaterial, beispielsweise ein Netz oder eine Folie, insbesondere zu Beginn eines Umhüllungsvorgangs von einer Umhüllungseinrichtung zu einer Leiteinrichtung zu leiten. Die Leiteinrichtung dient dazu, das Hüllmaterial darin zu unterstützen von dem Pressballen bzw. dem Pressmittel gefördert zu werden bzw. es an dem Pressmittel in Anlage zu halten. Das Leitmittel kann insbesondere auch dann eingesetzt werden, wenn das Hüllmaterial (noch) nicht von einem zu umhüllenden Pressballen und/oder noch nicht von einem das Hüllmaterial an den Pressraum der Ballenpresse bzw. an den Pressballen heranführenden bzw. fördernden Pressmittel, insbesondere endlosen Pressmittel, ergriffen wurde. Die Umhüllungseinrichtung weist dabei üblicherweise einen Hüllmaterialvorrat in der Art einer Vorratsrolle auf, von dem das Hüllmaterial meist mittels einer oder mehrerer Förderrollen abgezogen und vorbei an einer stromabwärts des Vorrats gelegenen Trenneinrichtung gefördert wird. Derartige Ballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in derArt von Stroh, Heu, Häckselgut etc.. Industrielle Pressen finden Verwendung bei der Verdichtung von Müll, Textilien oder anderen Stoffen bzw. bei deren Pressung zu Ballen.

Derartige herkömmliche Leiteinrichtungen sind üblicherweise direkt oder indirekt im Wesentlichen fest bzw. unbeweglich mit dem Rahmen der Ballenpresse bzw. der Leiteinrichtung verbunden. Die US 5,557,906 A offenbart eine Rundballenpresse mit einer Umhüllungsvorrichtung und einem Leitmittel, um das Hüllmaterial an einen Pressraum der Ballenpresse zu leiten. Die EP 3 216 341 A1 eine Rundballenpresse mit einer Umhüllungsvorrichtung und einem Leitmittel, um das Hüllmaterial an eine Leiteinrichtung der Ballenpresse zu leiten. Insbesondere bei schwierigen Erntebedingungen, wie beispielsweise besonders trockenem oder feuchtem Erntegut, kann es in einem Bereich zwischen der Umhüllungsvorrichtung und der Leiteinrichtung zu einer Ansammlung von Material kommen, die eine Förderung des Hüllmaterials behindern, zu Verstopfungen und/oder zu einer Beschädigung des Hüllmaterials führen kann.

Die der Erfindung zugrunde liegende Aufgabe wird daher darin gesehen, eine Ballenpresse und ein Verfahren vorzusehen, durch welche die vorgenannten Nachteile überwunden werden.

Die Aufgabe wird erfindungsgemäß durch die Lehre der Patentansprüche 1 und 7 gelöst. Weitere vorteilhafte Ausgestaltungen und Weiterbildungen der Erfindung gehen aus den Unteransprüchen hervor.

Diesbezüglich wird eine Ballenpresse mit einer Umhüllungsvorrichtung zur Umhüllung eines Pressballens mit einem Hüllmaterial, mit einer Leiteinrichtung zur Heranführung von Hüllmaterial an einen Pressraum der Ballenpresse, und mit einem Leitmittel vorgesehen, welches ausgebildet ist, um das Hüllmaterial von der Umhüllungsvorrichtung zu der Leiteinrichtung zu leiten. Das Leitmittel ist dabei derart bewegbar angeordnet, dass es wenigstens eine erste Stellung einnehmen kann, in der es einen Bereich zwischen der Umhüllungsvorrichtung und der Leiteinrichtung im wesentlichen überbrückt bzw. überspannt und eine zweite Stellung, in der es den Bereich zwischen der Umhüllungsvorrichtung und der Leiteinrichtung zumindest teilwiese freigibt. Auf diese Weise kann Material, beispielsweise in der Art von Erntegut, Erntegutresten, Schmutz, Abrieb etc., den Bereich zwischen der Umhüllungsvorrichtung und der Leiteinrichtung verlassen, wodurch einer Ansammlung, Anhaftungen, Ablagerungen und/oder insbesondere einer Behinderung des Hüllmaterials bzw. der Hüllmaterialzufuhr vorgebeugt und/oder entgegengewirkt werden kann. Bei der Ballenpresse kann es sich um eine industrielle Presse, beispielsweise eine Presse zur Bildung von Pressballen aus Materialien, wie etwa Papier, Abfall, Textilien etc. handeln. Insbesondere ist die Ballenpresse aber als eine landwirtschaftliche Ballenpresse zur Bildung vorzugsweise rundzylindrischer Pressballen ausgeführt. Es ist aber auch denkbar, dass die Ballenpresse als Presse zur Bildung quaderförmiger oder sonstiger Ballen ausgebildet ist. Die Ballenpresse kann sowohl einen Pressraum variabler als auch unveränderlicher Größe aufweisen.

Es ist denkbar, dass das Leitmittel um den Bereich freizugeben jede Art von, beispielsweise auch eine translatorische, Bewegung ausführt. In besonders einfacher Weise ist das Leitmittel aber verschwenkbar ausgebildet, insbesondere derart, dass es eine zumindest im Wesentlichen vertikal nach unten gerichtete Stellung einnehmen kann.

Vorteilhafterweise sind Mittel vorgesehen, über die das Leitmittel beweglich mit einem Rahmen der Ballenpresse und/oder der Leiteinrichtung verbindbar ist. Insbesondere ist das Leitmittel über diese Mittel schwenkbar mit dem Rahmen bzw. der Leiteinrichtung verbindbar. Die Mittel sind dabei vorzugsweise in und/oder an einem ersten Endbereich der Leitmittels vorgesehen, so dass dieses in einfacher Weise aus dem Bereich zwischen der Leiteinrichtung und der Umhüllungsvorrichtung bewegt bzw. verschwenkt werden kann. Hierzu können die Mittel als wenigstens ein Schwenklager ausgebildet sind bzw. ein solches aufweisen.

Das Leitmittel kann in jeder geeigneten Art und/oder Form ausgeführt sein. Besonders günstig ist es aber, wenn es in der Art einer Leitplatte bzw. eines Leitblechs oder -rosts ausgebildet ist. Ein der Umhüllungsvorrichtung zugewandter Endbereich des Leitmittels bzw. der Leitplatte kann zudem ein freies Ende aufweisen, das insbesondere in der Art eines von der Umhüllungsvorrichtung weg geöffneten Hakens und/oder umgebördelt ausgebildet ist. Dies ist günstig, um einer Ablagerungen und/oder Anhaftung von Material an dem Leitmittel/ bzw. dem freien Ende des Leitmittels vorzubeugen bzw. entgegenzuwirken.

Besonders günstig ist es, wenn das Leitmittel mit einer Trenneinrichtung der Umhüllungsvorrichtung zusammenwirken kann, der es vorzugsweise nachgeordnet ist.

Beispielsweise können Mittel vorgesehen sein, über die das Leitmittel wirksam mit der Trenneinrichtung in Wechselwirkung steht und der Bereich zwischen der Umhüllungsvorrichtung und der Leiteinrichtung beispielsweise in Abhängigkeit von einem Betriebszustand der Trenneinrichtung freigegeben oder überspannt werden kann. Vorzugsweise gibt das Leitmittel den Bereich zumindest dann frei, wenn die Trenneinrichtung eine Position einnimmt, in der sie das Hüllmaterial abtrennt. Auf diese Weise kann sich in dem Bereich befindliches Material, in der Art von Schmutz, Abrieb, Erntegut oder Erntegutresten den Bereich verlassen, ohne dass dies den eigentlichen Umhüllungsvorgang und/oder die Zufuhr bzw. Förderung von Hüllmaterial beeinflusst bzw. behindert.

Die Mittel sind beispielsweise als Anschlag- oder Führungselement ausgebildet, die an einem Träger der Trenneinrichtung angeordnet sind, und bringen das Leitmittel mit dem Träger der Trenneinrichtung in Wechselwirkung. Ist der Träger insbesondere direkt oder indirekt mittels eines Aktors, wie beispielsweise einem Hydraulikmotor, einem Stellmotor, einer Hebelanordnung o.ä., beispielsweise durch eine Steuer- bzw. Regeleinrichtung der Ballenpresse, steuer- oder regelbar bewegbar, so kann das Leitmittel durch diesen zusammen mit dem Träger bewegt werden bzw. dessen Bewegung folgen, wobei die Bewegung sowohl rotatorisch, translatorisch oder in Kombination beider Bewegungsarten erfolgen kann.

Gemäß einem Verfahren zum Betrieb einer derartigen Ballenpresse kann das Leitmittel insbesondere in Abhängigkeit von einem Betriebszustand einer Trenneinrichtung der Umhüllungseinrichtung wenigstens eine erste Stellung, in der das Leitmittel einen Bereich zwischen der Umhüllungsvorrichtung und der Leiteinrichtung zumindest im Wesentlichen überbrückt und eine zweite Stellung, in der es den Bereich zumindest bereichsweise freigibt, einnehmen. Auf diese Weise kann in der zweiten Stellung sich während der Ballenbildung und/oder der Umhüllung eines Pressballens mit Hüllmaterial zwischen der Umhüllungseinrichtung angesammeltes Material die Ballenpresse und insbesondere einen Bereich zwischen der Umhüllungsvorrichtung und der Leiteinrichtung verlassen, wodurch einer Ansammlungen/Ablagerung von Material entgegengewirkt und/oder vorgebeugt werden kann. Nimmt das Leitmittel die zweite Stellung zumindest dann ein, wenn die Trenneinrichtung in eine Stellung bewegt wird, in der sie das Hüllmaterial abtrennt, dann kann sich angesammeltes oder ansammelndes Material die Ballenpresse dann verlassen, wenn das Hüllmaterial durch die Trenneinrichtung von einem Vorrat bzw. einer Vorratsrolle abgetrennt wird. Nimmt das Leitmittel seine erste Stellung zumindest zu Beginn eines Umhüllungsvorgangs bzw. dann ein, wenn die Trenneinrichtung eine Position einnimmt, in der sie nicht auf das Hüllmaterial einwirkt, so kann das Leitmittel das Hüllmaterial darin unterstützen, von der Umhüllungsvorrichtung zu der Leiteinrichtung zu gelangen, um dort beispielsweise von einem Pressmittel ergriffen und in Richtung des Pressraums bzw. eines Pressballens gefördert zu werden.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Ballenpresse in Seitenansicht mit einer Umhüllungsvorrichtung, einer Leiteinrichtung und einem Leitmittel und die
- Fig. 2a und 2b: das Leitmittel in einer vergrößerten Darstellung in einer ersten und in einer zeiten Stellung.

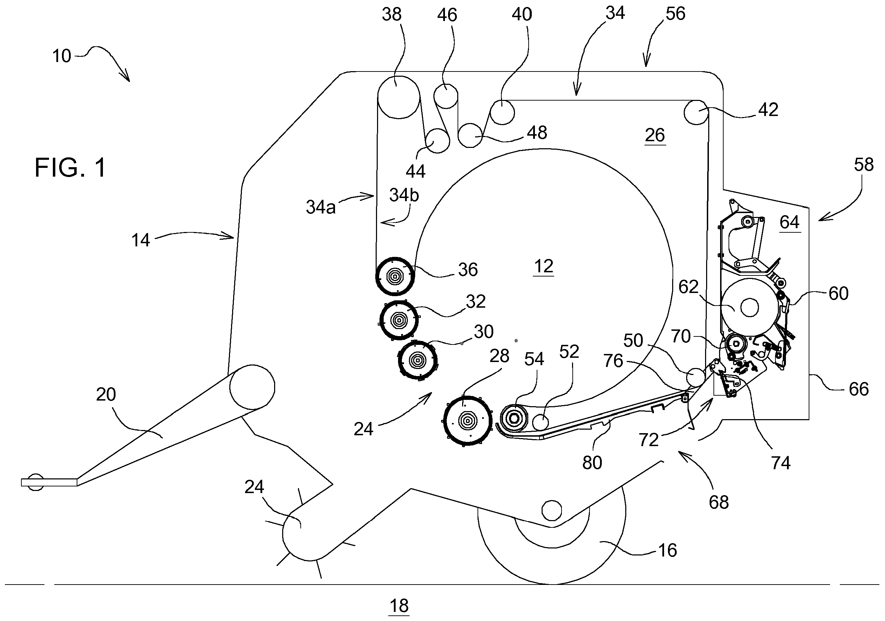

In der Figur 1 der Zeichnung wird eine schematisch dargestellte Ballenpresse 10, in der Art einer landwirtschaftlichen Rundballenpresse zum Pressen eines rundzylindrischen Pressballens 12 gezeigt, welche einen Rahmen 14 aufweist, der sich mittels Rädern 16 auf einem Untergrund 18 abstützt und die mittels einer Deichsel 20 an ein Zugfahrzeug, z. B. einen nicht gezeigten Ackerschlepper, anschließbar ist.

An einer bezogen auf eine Vorwärtsfahrtrichtung vorderen, unteren Seite des Rahmens 14 befindet sich in bekannter Weise eine Aufnahmevorrichtung 22 zur Aufnahme und Zufuhr von Erntegut, die geschnittenes Erntegut über einen Einlass 24 in einen Pressraum 26 fördert.

Am Einlass 24 des Ballenpressraums 26 sind eine untere, stationäre Rolle 28 und zwei obere Rollen 30, 32 positioniert. Der Ballenpressraum 26 wird weiterhin durch ein endloses Pressmittel 34 gebildet, das gemäß der vorliegenden Ausführungsform in der Art nebeneinander anliegender Pressriemen ausgeführt ist und um eine Anzahl von ortsfesten Walzen 36, 38, 40, 42 und bewegbaren Walzen 44, 46, 48, 50, 52, 54 geführt wird. Das Pressmittel 34 weist eine dem Rahmen 14 zugewandte Außenseite 34a und eine Innenseite 34b auf.

Während der Ballenpressraum 26 umfangsseitig im Wesentlichen von dem Pressmittel 34 und den Rollen 28, 30 und 32 umgeben wird, wird er seitlich von nicht gezeigten Seitenwänden begrenzt.

Drei Walzen 50, 52, 54 der bewegbaren Walzen 44 - 54 sind derart schwenkbar angelenkt, dass sie mittels eines Aktor (nicht gezeigt) aus der in Fig. 1 dargestellten Ballenbildungsposition in eine nach hinten und oben verschwenkte Ballenauswurfposition verbringbar sind.

Das Pressmittel 34 wird mittels nicht gezeigter Spannmittel fest an die drehend angetriebene, ortsfeste Walze 38 angelegt, dass seine Mitnahme gewährleistet ist. Auch die Walze 36 wird drehend angetrieben. Das Pressmittel 34 nimmt einen Anfangszustand ein, in dem es gerade gestreckt den Einlass 24 überbrückt, und einen Endzustand, in dem es sich wie dies in Figur 1 gezeigt wird, wie eine große Schlaufe um einen Pressballen 12 schlingt. Der Ballenpressraum 26 ist somit in seiner Größe veränderlich, d. h. sein Durchmesser nimmt mit der Größe des Pressballens 12 zu. Der Pressballen 12 befindet sich während seiner Bildung in dem Ballenpressraum 26 und wird von dem Pressmittel 34 größtenteils umschlungen, fällt aber aus dem Ballenpressraum 26 nach hinten auf den Untergrund 18, sobald die Walzen 50 - 54 zusammen mit einem rückwärtigen Gehäuseteil 56 verschwenken.

An dem rückwärtigen Gehäuseteil 56 ist darüber hinaus eine Umhüllungsvorrichtung 58 vorgesehen, die in an sich bekannter Weise ausgeführt ist, und die dazu geeignet ist, den Pressballen 12 mit einem Hüllmaterial 60 zu umhüllen. Das Hüllmaterial 60 ist auf einer Vorratsrolle 62 aufgerollt, welche im Innern 64 eines Gehäuses 66 aufgenommen wird, welches an dem rückwärtigen Gehäuseteil 56 angebracht ist und bei geschlossenem rückwärtigen Gehäuseteil 56 an einen unteren Bereich 68 der Ballenpresse 12 angrenzt.

Die Umhüllungsvorrichtung 58 weist eine Förderrolle 70 auf, welche das Hüllmaterial 60 zumindest zu Beginn eines Umhüllungsvorgangs von der Vorratsrolle 62 abziehen. Der Förderrolle 70 ist eine Trenneinrichtung 72 mit einem stationären Messer 74 und einer an einem Träger 76 aufgenommenen Gegenschneide 78 nachgeordnet Der Träger 76 kann nach Abschluss des Umhüllungsvorgangs zusammen mit der Gegenschneide 78 mittels eines nicht gezeigten Aktors sowohl verschwenkt als auch translatorisch versetzt bzw. bewegt werden, so dass die Gegenschneide 78 auf das Messer treffen und das den Pressballen 12 umhüllende Hüllmaterial 60 durch das Messer 74 von der Vorratsrolle 62 abgetrennt werden kann.

Angrenzend an die Umhüllungseinrichtung 58 ist in dem Bereich 68 der Ballenpresse 10 angrenzend an die Außenseite 34a Pressmittels 34 eine Leiteinrichtung 80 vorgesehen, die dazu beiträgt, das Hüllmaterial 60 an den Pressballen 12 heranzuführen, so dass das Hüllmaterial 60 durch den Pressballen 12 ergriffen werden kann, um diesen zu umhüllen.

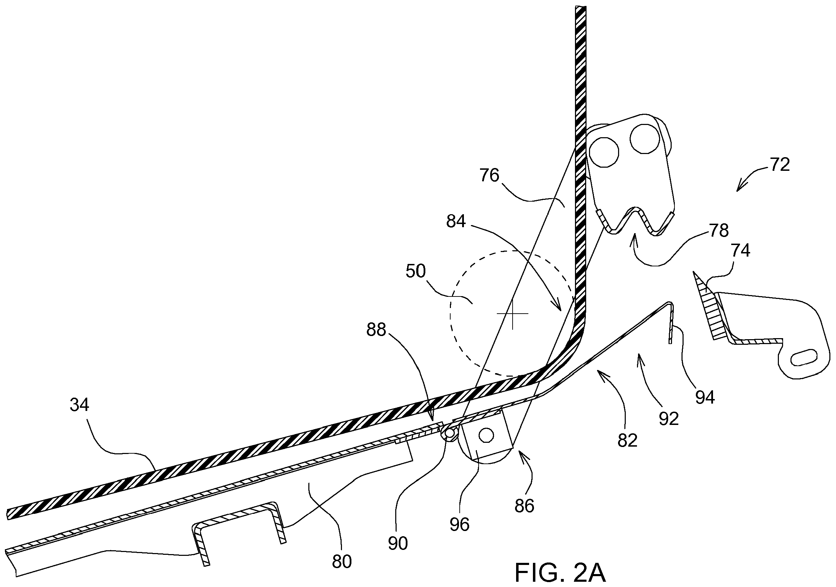

Es wird nun auch auf die Figur 2a der Zeichnung Bezug genommen, in der die Trenneinrichtung 72 und die Leiteinrichtung 80 ausschnittsweise vergrößert dargestellt werden. Wie bereits zuvor beschrieben, weist die Trenneinrichtung 72 ein stationäres Messer 74 und eine Gegenschneide 78 auf. Die Gegenschneide 78 bzw. der Träger 76 der Gegenschneide 78 kann mittels eines nicht gezeigten Aktors rotatorisch und translatorisch bewegt werden, um mit dem Messer 74 derart zusammenzuwirken, dass dieses das Hüllmaterial 60 am Ende bzw. zum Abschluss eines Umhüllungsvorgangs, bei dem der Pressballen 12 mit dem Hüllmaterial 60 umhüllt wird, von der Vorratsrolle 62 abtrennen kann.

Darüber hinaus ist ein Leitmittel 82 vorgesehen, welches einen Bereich 84 zwischen der Trenneinrichtung 72 der Umhüllungsvorrichutng 58 und der Leiteinrichtung 80 überspannt, um das Hüllmaterial 60 insbesondere zu Beginn eines Umhüllungsvorgangs an die Leiteinrichtung 80 heranzuführen, so dass dieses von dem Pressmittel 34 ergriffen werden kann, um wiederum an den Pressballen 12 herangeführt zu werden.

Das gemäß dem vorliegenden Ausführungsbeispiel in der Art eines Leitblechs ausgebildete Leitmittel 82 ist in einem ersten Endbereich 86 mittels eines Schwenklagers 88 an der Leiteinrichtung 80 angebracht, so dass es um einen Schwenkpunkt 90 verschwenken kann. Ein der Leiteinrichtung 80 abgewandter bzw. der Trenneinrichtung 72 bzw. der Umhüllungsvorrichtung 58 zugewandter Endbereich 92 des Leitmittels 82 ist im wesentlichen hakenartig bzw. derart umgebördelt ausgebildet, dass sich sein freies Ende 94 von der Trenneinrichtung 72 weg erstreckt. Im Bereich des ersten Endbereich 86 des Leitmittels 82 ist an dem Träger 76 ein Anschlag- oder Führungselement 96 vorgesehen, auf/an dem das Leitmittel 82 anliegt und dadurch derart mit dem Träger 76 der Gegenschneide 78 in Wechselwirkung steht, dass es in Abhängigkeit von der Position der Gegenschneide 78 bzw. der Position des Trägers 76 der Gegenschneide 78 und/oder deren Bewegungsbahn verschwenkt wird.

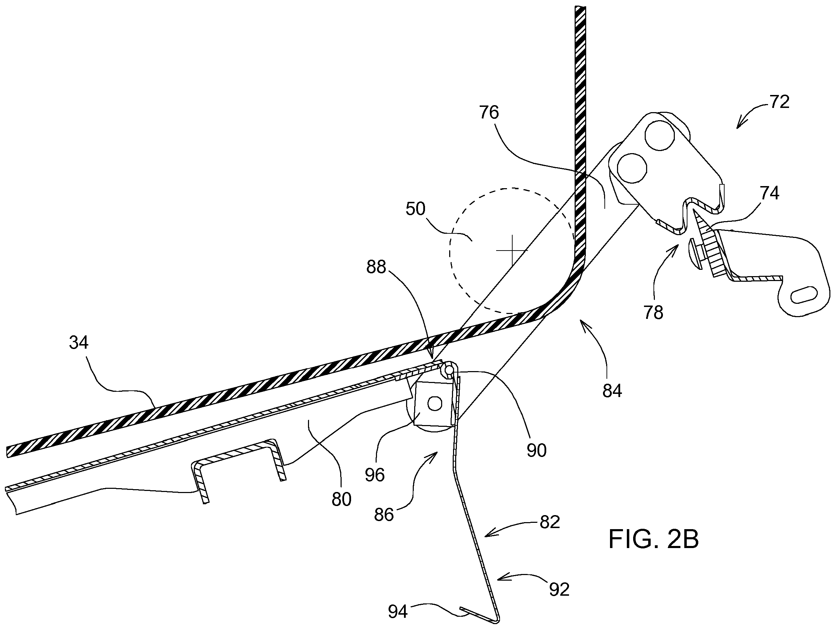

Im Folgenden soll nun schematisch die Funktionsweise des Leitmittels 82 dargestellt werden. Hierzu wird nun neben der Figur 2a, in der das Leitmittel 82 in einer ersten Stellung gezeigt wird, auch auf die Figur 2b der Zeichnung Bezug genommen, in der das Leitmittel 82 in einer zweiten Stellung gezeigt wird.

Zumindest während eines Umhüllungsvorgangs nimmt die Gegenschneide 78 ihre in der Fig. 2a gezeigte Position ein. Das an dem Träger 76 angeordnete Anschlag- oder Führungselement 96 drückt von unten derart an das Leitmittel 82, dass dieses in einer ersten Stellung gehalten wird und den Bereich 84 zwischen der Trenneinrichtung 72 und der Leiteinrichtung 80 überspannt bzw. überbrückt. In dieser ersten Stellung trägt das Leitmittel 82 dazu bei, dass das durch die Förderrolle 70 von der Vorratsrolle 62 abgezogene Hüllmaterial 60 zu der Leiteinrichtung 80 gelangt bzw. von dem Pressmittel 34 bzw. dessen Außenseite 34b in Richtung des Pressballens 12 gefördert wird, um dort zur Umhüllung des Pressballens 12 mit Hüllmaterial 60 von diesem ergriffen zu werden.

Nach erfolgter Umhüllung des Pressballens 12 mit Hüllmaterial 60 bzw. zum oder nach Abschluss eines Umhüllungsvorgangs wird die Gegenschneide 76 durch den nicht gezeigten Aktor mittels Rotation und Translation des Trägers 76 mit dem Messer 74 in Eingriff gebracht, so dass das Hüllmaterial 60 durch das Messer 74 von der Vorratsrolle 62 bzw. von dem übrigen auf der Vorratsrolle 62 befindlichen Hüllmaterial 60 abgetrennt wird.

Wie in den Figuren 2a und 2b dargestellt, steht das Leitmittel 82 mit dem Träger 76 über das Anschlag- oder Führungselement 96 derart in Wechselwirkung, dass es mittels Schwerkraft aus seiner ersten Stellung gemäß Figur 2a um den Schwenkpunkt 90 in seine zweite Stellung gemäß Figur 2b nach unten schwenkt und den Bereich 84 zwischen der Trenneinrichtung 72 und der Leiteinrichtung 78 freigibt. Das heißt, durch die von dem Aktor eingeleitete Rotation und Translation des Trägers 76 verlagert sich die Position des Anschlag- oder Führungselement 96 derart nach hinten und unten, dass das Leitmittel mittels Schwerkraft um den Schwenkpunkt 90 nach unten schwenkt und eine zweite Stellung einnimmt. Auf diese Weise kann sich in dem Bereich 84 und/oder oberhalb des Leitmittels 82 angesammeltes Material, beispielsweise in der Art von Verunreinigungen, Erntegut, Abrieb die Ballenpresse 12 verlassen, wodurch beispielsweise Verstopfungen und/oder Behinderungen einer Hüllmaterialzufuhr vorgebeugt bzw. entgegengewirkt und somit eine störungsfreie Zufuhr von Hüllmaterial 60 unterstützt werden kann.

## Patentansprüche

1. Ballenpresse (10) zur Bildung rundzylindrischer Pressballen (12), mit einer Umhüllungsvorrichtung (58) zur Umhüllung eines Pressballens (12) mit einem Hüllmaterial (60), mit einer Leiteinrichtung (80) zur Heranführung von Hüllmaterial (60) an einen Pressraum (26) der Ballenpresse (10), und mit einem Leitmittel (82), ausgebildet um das Hüllmaterial (60) über einen Bereich (84) von der Umhüllungsvorrichtung (58) zu der Leiteinrichtung (80) zu leiten, wobei das Leitmittel (82) derart bewegbar vorgesehen ist, dass es wenigstens eine erste Stellung, in der es den Bereich (84) zwischen der Umhüllungsvorrichtung (58) und der Leiteinrichtung im Wesentlichen überbrückt, und wenigstens eine zweite Stellung, in der es den Bereich (84) zumindest teilweise freigibt, einnehmen kann
**dadurch gekennzeichnet, dass**
Mittel vorgesehen sind, über die das Leitmittel (82) schwenkbar mit der Leiteinrichtung (80) verbunden ist.

2. Ballenpresse (10) nach Anspruch 1, **dadurch gekennzeichnet, dass** das Leitmittel (82) derart verschwenkbar vorgesehen ist, dass das Leitmittel (82) in der zweiten Stellung eine zumindest im Wesentlichen vertikal nach unten gerichtete Stellung einnehmen kann.

3. Ballenpresse (10) nach einem der vorherigen Ansprüche, wobei die Mittel in und/oder an einem ersten Endbereich (86) des Leitmittels (82) vorgesehen sind und/oder als wenigstens ein Schwenklager (88) ausgebildet sind bzw. ein solches aufweisen.

4. Ballenpresse (10) nach einem der vorherigen Ansprüche, **dadurch gekennzeichnet, dass** das Leitmittel (82) in der Art einer Leitplatte bzw. eines Leitblechs oder -rosts ausgebildet ist, die/der vorzugsweise einen der Umhüllungsvorrichtung (58) zugewandten Endbereich (92) aufweist, dessen freies Ende (94) insbesondere in der Art eines von der Umhüllungsvorrichtung (58) weg geöffneten Hakens und/oder umgebördelt ausgebildet ist.

5. Ballenpresse (10) nach einem der vorherigen Ansprüche, **dadurch gekennzeichnet, dass** eine Trenneinrichtung (72) der Umhüllungsvorrichtung (58) einen Träger (76) umfasst an dem ein Anschlag- oder Führungselement (96) ausgebildet ist, wobei das Leitmittel (82) über das Anschlag- oder Führungselement (96) mit der Trenneinrichtung (72) der Umhüllungsvorrichtung (58) in Wechselwirkung steht.

6. Ballenpresse (10) nach Anspruch 5, **dadurch gekennzeichnet, dass** der Träger (76) mittels eines Aktors steuer- oder regelbar bewegbar ist, wobei das Leitmittel (82) über das Anschlag- oder Führungselement (96) mit der Trenneinrichtung (72) der Umhüllungsvorrichtung (58) derart in Wechselwirkung steht, dass es den Bereich (84) zumindest dann freigibt, wenn die Trenneinrichtung (72) eine Position einnimmt, in der sie das Hüllmaterial (60) abtrennt und dass es den Bereich (84) überbrückt, wenn die Trenneinrichtung (72) eine Position einnimmt, in der sie nicht auf das Hüllmaterial einwirkt.

7. Verfahren zum Betrieb einer Ballenpresse (12) nach einem der Ansprüche 1 bis 6, **dadurch gekennzeichnet, dass** das Leitmittel (82) insbesondere in Abhängigkeit von einem Betriebszustand einer Trenneinrichtung (72) der Umhüllungseinrichtung (58) wenigstens eine erste Stellung, in der das Leitmittel (82) einen Bereich (84) zwischen der Umhüllungsvorrichtung (58) und der Leiteinrichtung (80) im Wesentlichen überbrückt, und eine zweite Stellung, in der es den Bereich (84) zumindest bereichsweise freigibt, einnehmen kann, wobei das Leitmittel (82) die zweite Stellung vorzugsweise zumindest dann einnimmt, wenn die Trenneinrichtung (72) in eine Stellung bewegt wird, in der sie das Hüllmaterial (60) abtrennt und die erste Stellung zumindest zu Beginn eines Umhüllungsvorgangs bzw. dann einnimmt, wenn die Trenneinrichtung (72) eine Position einnimmt, in der sie nicht auf das Hüllmaterial einwirkt **dadurch gekennzeichnet, dass** Mittel vorgesehen sind, über die das Leitmittel (82) schwenkbar mit der Leiteinrichtung (80) verbunden ist.

## Claims

1. Baler (10) for forming round-cylindrical pressed bales (12), comprising a wrapping device (58) for wrapping a pressed bale (12) with a wrapping material (60), a guiding device (80) for leading wrapping material (60) to a pressing chamber (26) of the baler (10), and a guiding means (82) designed for guiding the wrapping material (60) over a region (84) from the wrapping device (58) to the guiding device (80), wherein the guiding means (82) is provided movably in such a way that it can adopt at least a first position, in which it substantially bridges the region (84) between the wrapping device (58) and the guiding device, and at least a second position, in which it at least partially frees the region (84),
**characterized in that**
means are provided via which the guiding means (82) is connected pivotably to the guiding device (80).

2. Baler (10) according to Claim 1, **characterized in that** the guiding means (82) is provided pivotably in such a way that the guiding means (82) in the second position can adopt an at least substantially vertically downwardly directed position.

3. Baler (10) according to one of the preceding claims, wherein the means are provided in and/or at a first end region (86) of the guiding means (82) and/or are designed as or have at least one pivot bearing (88).

4. Baler (10) according to one of the preceding claims, **characterized in that** the guiding means (82) is designed in the manner of a guide plate or a guide panel or grate which preferably has end end region (92) facing towards the wrapping device (58) and whose free end (94) is designed in particular in the manner of a hook opened away from the wrapping device (58) are/or is flanged.

5. Baler (10) according to one of the preceding claims, **characterized in that** a separating device (72) of the wrapping device (58) comprises a carrier (76) on which a stop or guide element (96) is formed, wherein the guiding means (82) interacts with the separating device (72) of the wrapping device (58) via the stop or guide element (96) .

6. Baler (10) according to Claim 5, **characterized in that** the carrier (76) is movable by means of an actuator by open-loop or closed-loop control, wherein the guiding means (82) interacts with the separating device (72) of the wrapping device (58) via the stop or guide element (96) in such a way that it frees the region (84) at least when the separating device (72) adopts a position in which it cuts off the wrapping material (60), and in such a way that it bridges the region (84) when the separating device (72) adopts a position in which it does not act on the wrapping material.

7. Method for operating a baler (12) according to one of Claims 1 to 6, **characterized in that** the guiding means (82), in particular depending on an operating state of a separating device (72) of the wrapping device (58), can adopt at least a first position, in which the guiding means (82) substantially bridges a region (84) between the wrapping device (58) and the guiding device (80), and a second position, in which it at least in part frees the region (84), wherein the guiding means (82) preferably adopts the second position at least when the separating device (72) is moved to a position in which it cuts off the wrapping material (60), and adopts the first position at least at the start of a wrapping procedure or when the separating device (72) adopts a position in which it does not act on the wrapping material,
**characterized in that** means are provided via which the guiding means (82) is connected pivotably to the guiding device (80).

## Revendications

1. Presse à balles (10) pour former des balles pressées cylindriques rondes (12), avec un dispositif d'enveloppement (58) pour envelopper une balle pressée (12) avec un matériau d'enveloppement (60), avec un système de conduction (80) pour amener du matériau d'enveloppement (60) à une chambre de pressage (26) de la presse à balles (10), et avec un moyen de conduction (82) configuré pour conduire le matériau d'enveloppement (60) sur une zone (84) du dispositif d'enveloppement (58) vers le système de conduction (80), le moyen de conduction (82) étant prévu de manière à pouvoir se déplacer de telle sorte qu'il peut prendre au moins une première position dans laquelle il enjambe essentiellement la zone (84) entre le dispositif d'enveloppement (58) et le système de guidage, et au moins une deuxième position dans laquelle il libère au moins partiellement la zone (84)
**caractérisée en ce que**
des moyens sont prévus, par l'intermédiaire desquels le moyen de conduction (82) est relié de manière pivotante au système de conduction (80).

2. Presse à balles (10) selon la revendication 1, **caractérisée en ce que** le moyen de conduction (82) est prévu de manière à pouvoir pivoter de telle sorte que le moyen de conduction (82) peut prendre une position dirigée au moins essentiellement verticalement vers le bas dans la deuxième position.

3. Presse à balles (10) selon l'une quelconque des revendications précédentes, dans laquelle les moyens sont prévus dans et/ou sur une première zone d'extrémité (86) du moyen de conduction (82) et/ou sont configurés sous la forme d'au moins un palier de pivotement (88) ou présentent un tel palier.

4. Presse à balles (10) selon l'une quelconque des revendications précédentes, **caractérisée en ce que** le moyen de conduction (82) est configuré à la manière d'une plaque de conduction ou d'une tôle ou grille de conduction, qui présente de préférence une zone d'extrémité (92) tournée vers le dispositif d'enveloppement (58), dont l'extrémité libre (94) est configurée notamment à la manière d'un crochet ouvert à l'opposé du dispositif d'enveloppement (58) et/ou rabattue.

5. Presse à balles (10) selon l'une quelconque des revendications précédentes, **caractérisée en ce qu'**un système de séparation (72) du dispositif d'enveloppement (58) comprend un support (76) sur lequel est configuré un élément de butée ou de guidage (96), le moyen de conduction (82) interagissant avec le système de séparation (72) du dispositif d'enveloppement (58) par l'intermédiaire de l'élément de butée ou de guidage (96).

6. Presse à balles (10) selon la revendication 5, **caractérisée en ce que** le support (76) peut être déplacé de manière commandable ou réglable au moyen d'un actionneur, le moyen de conduction (82) interagissant avec le système de séparation (72) du dispositif d'enveloppement (58) par l'intermédiaire de l'élément de butée ou de guidage (96) de telle sorte qu'il libère la zone (84) au moins lorsque le système de séparation (72) prend une position dans laquelle il sépare le matériau d'enveloppement (60) et qu'il enjambe la zone (84) lorsque le système de séparation (72) prend une position dans laquelle il n'agit pas sur le matériau d'enveloppement.

7. Procédé d'exploitation d'une presse à balles (12) selon l'une quelconque des revendications 1 à 6, **caractérisé en ce que** le moyen de conduction (82) peut prendre, notamment en fonction d'un état d'exploitation d'un système de séparation (72) du dispositif d'enveloppement (58), au moins une première position dans laquelle le moyen de conduction (82) enjambe essentiellement une zone (84) entre le dispositif d'enveloppement (58) et le système de conduction (80), et une deuxième position dans laquelle il libère au moins par zones la zone (84), le moyen de conduction (82) prenant de préférence la deuxième position au moins lorsque le système de séparation (72) est déplacé dans une position dans laquelle il sépare le matériau d'enveloppement (60) et prenant la première position au moins au début d'une opération d'enveloppement ou lorsque le système de séparation (72) prend une position dans laquelle il n'agit pas sur le matériau d'enveloppement, **caractérisé en ce que** des moyens sont prévus, par l'intermédiaire desquels le moyen de conduction (82) est relié de manière pivotante au système de conduction (80).
